# EUROPÄISCHE PATENTSCHRIFT

(11) **EP 2 322 768 B1**
(45) Veröffentlichungstag und Bekanntmachung des Hinweises auf die Patenterteilung: **19.10.2016**
(21) Anmeldenummer: 09014230.8
(22) Anmeldetag: 13.11.2009
(51) Int. Cl.: F01K 7/34, F01K 7/40

(54) **Dampfkraftanlage sowie Verfahren zum Betrieb einer Dampfkraftanlage**
Steam power assembly and method for operating same
Centrale à vapeur et procédé de fonctionnement d'une centrale à vapeur

(43) Veröffentlichungstag der Anmeldung: 18.05.2011
(73) Patentinhaber: Siemens Aktiengesellschaft, 80333 München (DE)
(72) Erfinder: Birnbaum, Jürgen, 90419 Nürnberg (DE); Fichtner, Markus, 91639 Wolframs-Eschenbach (DE)

(56) Entgegenhaltungen:
- EP-A1- 1 241 323
- US-A- 4 069 674
- MARKO A: "VERBESSERUNG FOSSILGEFEUERTER DAMPFKRAFTWERKE DURCH SOLARE WAERMEZUFUHR" BWK BRENNSTOFF WARME KRAFT, SPRINGER VDI VERLAG, DUSSELDORF, DE, Bd. 47, Nr. 7/08, 1. Juli 1995 (1995-07-01), Seiten 303-308, XP000520839 ISSN: 1618-193X
- GABRIEL MORIN ET AL: "Plug-in strategy for Market Introductionof Fresnel-Collectors" SOLARPACES CONFERENCE, XX, XX, 1. Januar 2004 (2004-01-01), Seiten 1-11, XP008084268

## Beschreibung

Die Erfindung betrifft eine Dampfkraftanlage, insbesondere ein Dampfkraftwerk (DKW) oder ein Gas- und Dampfkraftwerk (GUD), umfassend einen konventionellen Dampferzeuger zur Erzeugung von Dampf, zumindest eine Turbine, einen der Turbine abdampfseitig nachgeschalteten Kondensator und ein Wasserleitungssystem, um Wasser aus dem Kondensator als Speisewasser wieder dem Dampferzeuger zuzuführen, wobei das Wasserleitungssystem zur Vorwärmung des Speisewassers bevor es dem Dampferzeuger zugeführt wird eine Vorwärmeanordnung aufweist, welche zumindest einen durch Anzapfdampf betriebenen Vorwärmer, sowie eine parallel zum Vorwärmer angeordnete Bypass-Leitung umfasst. Die Erfindung betrifft weiterhin ein Verfahren zum Betrieb einer Dampfkraftanlage, wobei mittels eines konventionellen Verfahrens in einem Dampferzeuger erzeugter Dampf nach dem Durchströmen zumindest einer Turbine in einem Kondensator zu Wasser kondensiert wird, welches dem Dampferzeuger als Speisewasser zugeführt wird, wobei das Speisewasser während des Betriebs zumindest zeitweise in einer Vorwärmer-Anordnung unter Nutzung von Anzapfdampf vorgewärmt wird. Unter einem "konventionellen" Dampferzeuger wird dabei im Weiteren ein Dampferzeuger verstanden, welcher mit einer nicht-solaren Methode arbeitet. Hierunter fallen insbesondere Dampferzeuger die z.B. einen Kessel aufweisen, der mit geeignetem Brennstoff, beispielsweise fossilem Brennstoff, Biomasse oder dergleichen, befeuert wird.

Bei solchen Dampfkraftanlagen ist es allgemein bekannt, dass der Wirkungsgrad erhöht werden kann, wenn das Speisewasser bereits vor dem Dampferzeuger auf eine Temperatur knapp unterhalb der Siedetemperatur vorgewärmt wird. Hierzu wird üblicherweise sogenannter "Anzapfdampf", d.h. ein Teildampf-Massenstrom aus der Turbinendampfmenge verwendet und einem Vorwärmer zugeführt. Bei einem solchen Vorwärmer handelt es sich um einen Wärmetauscher, in dem der heiße Dampf seine Wärmeenergie an das Speisewasser abgibt. In der Regel wird dabei der Anzapfdampf aus der Turbine selber entnommen, d.h. es wird kein hochqualitativer Frischdampf für den Vorwärmer genutzt, sondern Dampf, der bereits durch einen ersten Turbinenabschnitt gelaufen ist. Zur Erhöhung des Wirkungsgrades weisen jedoch Dampfkraftanlagen meist nicht nur eine Turbine auf, sondern eine Turbinengruppe mit z.B. einer Hochdruckturbine und zumindest einer dieser Hochdruckturbine abdampfseitig nachgeschalteten Niederdruckturbine. Größere Anlagen weisen in der Regel sogar noch weitere Turbinenmodule auf, z.B. eine oder mehrere Mitteldruckturbinen. Wird Anzapfdampf für einen Vorwärmer aus einer Turbinenstufe entnommen, so verringert sich die Dampfmenge für die nachfolgenden Turbinenstufen, die somit dem Dampffluid weniger Leistung entnehmen können.

Aus diesem Grund wird in der EP 1 241 323 A1 eine Dampfkraftanlage der eingangsgenannten Art vorgeschlagen, bei der parallel zu einem durch den Anzapfdampf betriebenen Vorwärmer eine Bypass-Leitung angeordnet ist und nur ein Teil des Speisewassers durch den Vorwärmer geleitet wird und ein anderer Teil durch die Bypass-Leitung um den Vorwärmer herum geführt wird. Durch geeignete Ventileinstellungen können die jeweiligen Teilströme variiert werden. Durch die teilweise und gezielte Umführung des Speisewassers um die Vorwärmung wird die Möglichkeit der bedarfsweisen, erforderlichenfalls häufigen, Leistungserhöhungen der Turbine einer Dampfkraftanlage gegeben. Hierfür ist es jedoch notwendig, dass alle Komponenten (z.B. Turbinen, Rohrleitungssystem, Ventile etc.) der Dampfkraftanlage so ausgelegt sind, dass mit entsprechend höherer Leistung gefahren werden kann. Eine Erhöhung der Leistung durch eine (Teil-)Umgehung des Vorwärmers ist insbesondere dann vorteilhaft, wenn kurzzeitig eine höhere Leistung angefordert wird oder wirtschaftlich sinnvoll ist. Der Nachteil ist jedoch, dass in Zeiten der erhöhten Leistungsabnahme durch die geringere Temperatur des Speisewassers beim Eintritt in den Dampferzeuger der Brennstoffbedarf überproportional höher ist, wodurch der Wirkungsgrad der gesamten Dampfkraftanlage verringert wird.

Aus der Veröffentlichung US 4 069 674 geht zudem hervor, eine Solar-Vorwärmeeinrichtung zu verwenden, die parallel zur oben beschriebenen Bypass-Leitung angeordnet ist. Die Solar-Vorwärmeinrichtung weist einen Sonnenkollektor auf, um durchlaufendes Speisasser direkt durch Sonnenstrahlung vorzuwärmenn. Der Sonnenkollektor weist dazu zwei Kollektorplatten auf, zwischen die das Speisewasser zur Aufnahme von Sonnenenergie geleitet wird.

Es ist eine Aufgabe der vorliegenden Erfindung, eine Dampfkraftanlage und ein Verfahren zum Betrieb einer Dampfkraftanlage der eingangs genannten Art derart weiter zu entwickeln, dass auf kostengünstige Weise eine Leistungserhöhung, die durch eine Umgehung des mit dem Anzapfdampf betriebenen Vorwärmers erreicht wird, mit einer geringeren Wirkungsgradreduzierung als bei bisherigen Dampfkraftanlagen verbunden ist, und somit die Dampfkraftanlage auch in Zeiten erhöhter Leistungsabnahme effizienter betrieben werden kann.

Erfindungsgemäß weist die Vorwärmer-Anordnung hierzu eine parallel zu dem durch Anzapfdampf betriebenen Vorwärmer geschaltete, d.h. strömungstechnisch parallel angeordnete, Solar-Vorwärmeinrichtung auf. Bei dem erfindungsgemäßen Betriebsverfahren erfolgt entsprechend zumindest zeitweise eine Vorerwärmung von Speisewasser in einer parallel zu dem durch Anzapfdampf betriebenen Vorwärmer geschalteten Solar-Vorwärmeinrichtung. Ein durch Anzapfdampf betriebener Vorwärmer wird nachfolgend auch kürzer als "konventioneller Vorwärmer" bezeichnet.

Ein Kernpunkt der Idee ist es also, Dampfkraftanlagen der eingangs genannten Art, die bereits einen Vorwärmerbypass aufweisen und ohnehin auf eine Fahrweise mit umfahrenen konventionellen Vorwärmern ausgelegt sind, nun mit einem "Solar-Vorwärmer-Bypass" auszustatten. Dies ermöglicht es, im Bypass-Betrieb zusätzlich solare Wärme in das Speisewasser einzukoppeln ohne dass ein Einsatz von Anzapfdampf notwendig ist. Somit kann die Turbine mit hoher Leistung gefahren werden und gleichzeitig zur Optimierung des Wirkungsgrades und zur Einsparung von Brennstoff das Speisewasser erwärmt werden. Auf diese Weise ist also bei gleicher Leistungssteigerung wie bei den bekannten Kraftwerken eine erhebliche Steigerung des Wirkungsgrades möglich. Im Gegensatz zu anderen Konstruktionen, bei denen beispielsweise ein Solarelement an anderer Stelle, beispielsweise vor oder hinter den üblichen konventionellen Vorwärmern in die Speisewasserleitung oder parallel dazu geschaltet wird, sind bei einer Nachrüstung von Dampfkraftanlagen auf die erfindungsgemäße Weise keine bedeutenden Veränderungen in der Dampfkraftanlage nötig. Insbesondere muss weder die Thermodynamik, noch die Dampferzeugerauslegung, die Rohrleitungsdimensionierung etc. geändert werden, da ja bereits im Anlagendesign die Umfahrung der konventionellen Speisewasservorwärmer für einen normalen konventionellen Betrieb berücksichtigt wurde. Die Realisierung der Erfindung ist daher insbesondere an bereits bestehenden Dampfkraftanlagen besonders kostengünstig und aufgrund des geringeren Aufwands auch von der Gesamtenergiebilanz günstiger als andere Varianten der Nutzung von Sonnenenergie in konventionellen Kraftwerken.

Insbesondere macht eine Nachrüstung von solchen Kraftwerken Sinn, die in besonders sonnenreichen Ländern liegen, da bekanntermaßen dort gerade dann eine hohe Leistung für Klimaanlagen abgefragt wird, wenn eine starke Sonneneinstrahlung vorliegt. Diese Leistungserhöhung kann dann von den Kraftwerken durch eine Umfahrung der konventionellen Vorwärmer geliefert werden, wobei gleichzeitig der Wirkungsgrad durch den Wärmeeintrag in der Solar-Vorwärmeinrichtung hoch gehalten werden kann.

Die abhängigen Ansprüchen sowie die nachfolgende Beschreibung enthalten besonders vorteilhafte Ausgestaltungen und Weiterbildungen der Erfindung, wobei explizit darauf hingewiesen wird, dass das erfindungsgemäße Betriebsverfahren auch entsprechend den abhängigen Ansprüchen zur Dampfkraftanlage weitergebildet sein kann.

Bei einem besonders einfachen Ausführungsbeispiel ist die Solar-Vorwärmeinrichtung unmittelbar in der vorhandenen Bypass-Leitung angeordnet. D.h. es muss beispielsweise bei einer Nachrüstung eines Kraftwerks lediglich an einer Stelle eine Solar-Vorwärmeinrichtung so in die Bypass-Leitung integriert werden, dass das durch die Bypass-Leitung strömende Speisewasser direkt oder indirekt durch die solare Einstrahlung erwärmt wird.

Bei einer alternativen Variante ist die Solar-Vorwärmeinrichtung in einer parallel zur Bypass-Leitung geschalteten weiteren Leitung angeordnet. Bei dieser Variante kann vorteilhafterweise, wenn die Solar-Vorwärmeinrichtung nicht funktioniert, weil beispielsweise zu diesem Zeitpunkt gerade keine ausreichende Sonneneinstrahlung vorliegt, der übliche Bypass wieder verwendet werden, um auf die übliche Weise eine Leistungserhöhung durch eine Umgehung des konventionellen Vorwärmers zu erreichen ohne dass im Bypass ein zusätzlicher Druckverlust durch die Solar-Vorwärmeinrichtung auftritt.

Die Solar-Vorwärmeinrichtung weist zumindest einen Sonnenkollektor auf, um das durchlaufende Speisewasser direkt durch Sonneneinstrahlung vorzuwärmen. Der Sonnenkollektor ist ein Parabolr-iien_Kollektor. Sinnvollerweise wird in der Realität meist nicht nur ein Sonnenkollektor verwendet, sondern zumindest ein Kollektorstrang mit mehreren in Reihe geschalteten Sonnenkollektoren oder sogar ein oder mehrere Solarfelder, welche jeweils mehrere parallel geschaltete Sonnenkollektorstränge aufweisen können. Eine solche direkterhitzende Solar-Vorwärmeinrichtung hat den Vorteil, dass keine weitere Pumpe benötigt wird, da das Speisewasser durch die Speisewasserpumpe ohnehin durch die Sonnenkollektoren gedrückt wird.

Bei einer anderen Variante weist die Solar-Vorwärmeinrichtung zumindest einen Sonnenkollektor auf, um im Betrieb ein Wärmeträgermedium durch Sonneneinstrahlung aufzuheizen, sowie einen Wärmetauscher, um Wärme von dem Wärmeträgermedium an das Speisewasser zu übertragen. Hierbei handelt es sich also um eine indirekte Erwärmung des Speisewassers mit einem zwischengeschalteten Wärmeträgermedium, welches beispielsweise in einem eigenen Kreislauf mit einer eigenen Pumpe zwischen dem Wärmetauscher und dem Sonnenkollektor in einem Kreislauf zirkuliert wird. Auch hier wird vorzugsweise nicht nur ein Sonnenkollektor, sondern ein oder mehrere Sonnenkollektorstränge bzw. ganze Solarfelder eingesetzt. Bei einer solchen indirekten Einbindung ist der Einsatz sämtlicher Wärmeträgermedien, z.B. Wasser, Thermo-Öl, geschmolzenes Salz etc. möglich.

Als Solarkollektoren kommen in beiden Fällen vorzugsweise Parabolrinnen-Kollektoren und/oder Fresnel-Kollektoren zum Einsatz.

Besonders bevorzugt weist die Dampfkraftanlage eine geeignete Ventilanordnung auf, um eine Wasserdurchflussmenge durch den konventionellen Vorwärmer und/oder die Bypass-Leitung und/oder die Solar-Vorwärmeinrichtung einzustellen. Eine solche Ventilanordnung weist vorzugsweise eine Vielzahl von Ventilen in Stromrichtung vor und ggf. auch hinter den jeweiligen Leitungen auf, die z.B. durch eine gemeinsame Steuereinrichtung so angesteuert werden können, dass genau definierte Massenströme durch den konventionellen Vorwärmer, die Bypass-Leitung bzw. die Solar-Vorwärmeinrichtung strömen. Die Einstellung kann dabei jeweils von der angeforderten Leistung der Dampfkraftanlage abhängen aber auch von anderen Randbedingungen, insbesondere von der zur Verfügung stehenden Sonneneinstrahlung. Dabei sind die Ventile vorzugsweise nicht nur ansteuerbar, sondern mit geeigneten Regeleinrichtungen versehen, so dass insbesondere auch eine Regelung auf verschiedenste Eingangsparameter, beispielsweise eine konstante Speisewassertemperatur hinter der Vorwärmer-Anordnung, möglich ist.

In vielen Kraftwerken weist die Vorwärmer-Anordnung nicht nur einen sondern mehrere, vorzugsweise in Reihenschaltung hintereinander angeordnete konventionelle Vorwärmer auf. Dabei ist es auch üblich, das Kondensat eines Vorwärmers in einen Vorwärmer mit niedrigerer Druckstufe weiterzuleiten bis es z. B. im Speisewasserbehälter wieder dem Hauptkreis zugeführt wird. Bei einem Aufbau mit mehreren konventionellen Vorwärmern ist vorzugsweise die Solar-Vorwärmeinrichtung in einer Leitung angeordnet, die die gesamte Reihenschaltung von Vorwärmern überbrückt.

Üblicherweise befinden sich konventionelle Vorwärmer auch an mehreren voneinander getrennten Stellen innerhalb des Wasserleitungssystems. So umfasst das Wasserleitungssystem üblicherweise eine Kondensatleitung, die von einem Kondensatsammler unterhalb des Kondensators über eine Kondensatpumpe zu einem Speisewasserbehälter führt. Vom Speisewasserbehälter führt dann eine Speisewasserleitung zum Dampferzeuger. Entsprechend können sowohl in der Kondensatleitung als auch in der Speisewasserleitung konventionelle Vorwärmer angeordnet sein. Ein in der Kondensatleitung angeordneter konventioneller Vorwärmer wird üblicherweise als "Niederdruck-Vorwärmer" bezeichnet, da solche Vorwärmer in der Regel mit Dampf aus der Niederdruck-Turbine gespeist werden. Vorwärmer in der Speisewasserleitung, in denen das Wasser dann auf höhere Temperaturen vorgewärmt werden soll, werden dagegen mit Anzapfdampf aus den Hochdruck-Turbinen oder ggf. Mitteldruck-Turbinen gespeist und daher als "Hochdruck-Vorwärmer" bezeichnet. Prinzipiell ist es möglich eine erfindungsgemäße Umgehung mit einer Solar-Vorwärmeinrichtung auch bei einem Niederdruck-Vorwärmer einzusetzen. Besonders bevorzugt ist aber der Einsatz an einer Hochdruck-Vorwärmer-Anordnung, mit einem oder mehreren konventionellen Hochdruck-Vorwärmern da insbesondere bei diesen Vorwärmern eine Umgehung sinnvoll ist, um zur Leistungserhöhung Anzapfdampf einzusparen. Somit ist gerade an dieser Stelle eine Wirkungsgraderhöhung durch zusätzliche Solarenergie sinnvoll.

Die Erfindung wird im Folgenden anhand von Ausführungsbeispielen unter Hinweis auf die beigefügten Zeichnungen näher erläutert. Es zeigen:
Figur 1 ein vereinfachtes schematisches Blockdiagramm eines ersten Ausführungsbeispiels einer erfindungsgemäßen Dampfkraftanlage,
Figur 2 ein schematisches Blockschaltbild eines eine Vorwärmer-Anordnung zeigenden Ausschnitts einer erfindungsgemäßen Dampfkraftanlage gemäß einem zweiten Ausführungsbeispiel,
Figur 3 ein schematisches Blockschaltbild eines eine Vorwärmer-Anordnung zeigenden Ausschnitts einer erfindungsgemäßen Dampfkraftanlage gemäß einem dritten Ausführungsbeispiel,

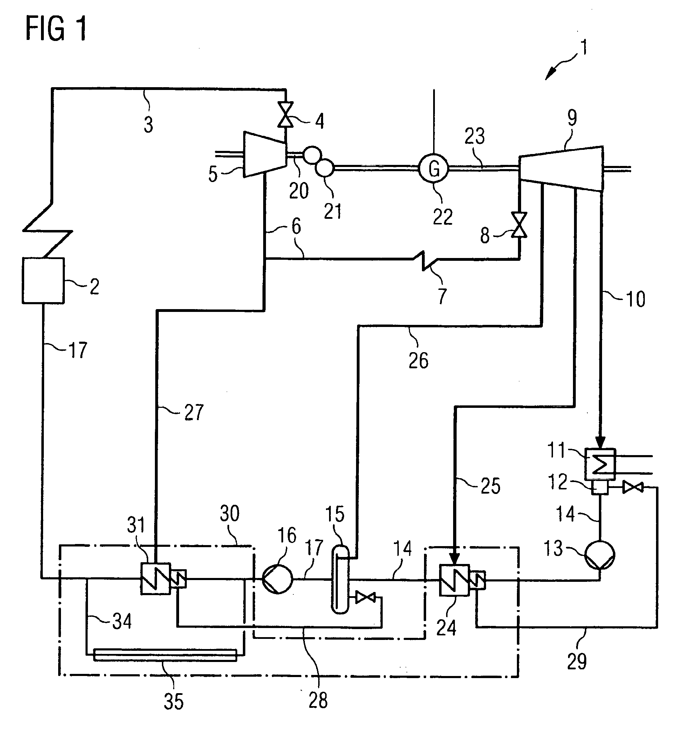

Bei der in Figur 1 dargestellten Dampfkraftanlage 1 handelt es sich um ein Dampfkraftwerk 1 mit einem konventionellen Dampferzeuger 2. Hierbei handelt es sich beispielsweise um einen Kessel, welcher mit einem Brennstoff, beispielsweise fossilem Brennstoff oder Biomasse, befeuert wird. Der in dem Dampferzeuger 2 erzeugte Dampf gelangt dann über eine Dampfleitung 3 zu einer Hochdruck-Turbine 5. Die Dampfmenge kann mit Hilfe eines Ventils 4 vor dem Eingang der Hochdruck-Turbine 5 eingestellt werden. Der Frischdampf treibt die Turbine 5 an, welche über eine Welle 20 mit einem Getriebe 21 verbunden ist, das abtriebsseitig wiederum einen Generator 22 antreibt. Der durch die Hochdruck-Turbine strömende Dampf wird abdampfseitig über eine Leitung 6 zunächst zu einem Zwischenüberhitzer 7 geführt. Dieser Zwischenüberhitzer 7 befindet sich in der Regel im Dampfkessel des Dampferzeugers 2. In diesem Zwischenüberhitzer 7 wird der Abdampf der Hochdruck-Turbine 5 noch einmal auf eine höhere Temperatur überhitzt und dann über ein Ventil 8 dem Eingang einer Niederdruck-Turbine 9 zugeführt. Eine Welle 23 der Niederdruck-Turbine 9 treibt abtriebsseitig wiederum den Generator 22 an. Über eine Leitung 10 wird der Dampf aus der Niederdruck-Turbine 9 abdampfseitig zu einem Kondensator 11 geführt, welcher einen Wärmetauscher aufweist, der mit einem Kühlturm (nicht dargestellt) verbunden ist. In diesem Kondensator 11 schlägt sich der Dampf aus der Niederdruck-Turbine 9 nieder und das dabei entstehende Kondensatwasser wird in einem Kondensatsammler 12 aufgefangen. Mittels einer Kondensatpumpe 13 wird das Kondensat dann durch eine Kondensatleitung 14 in einen Speisewasserbehälter 15 gepumpt.

In der Kondensatleitung 14 befindet sich außerdem ein Vorwärmer 24, welcher über eine Dampfleitung 25 durch Anzapfdampf aus der Niederdruck-Turbine 9 gespeist wird. Dieser Vorwärmer 24 wird daher auch Niederdruck-Vorwärmer 24 genannt. Der Anzapfdampf kondensiert in diesem Niederdruck-Vorwärmer 24 und gibt dabei seine Restwärme an das durch die Kondensatleitung 14 gepumpte Wasser ab und wärmt dieses damit vor. Das Kondensat des im Niederdruck-Vorwärmers 24 genutzten Dampfs wird dann über eine Leitung 29 zum Kondensatsammler 12 geführt. Eine weitere Leitung 26 führt von der Niederdruck-Turbine 9 direkt zum Speisewasserbehälter 15. Hierdurch wird Dampf in den Speisewasserbehälter 15 geleitet, um dort das Hauptkondensat zu entgasen und vorzuwärmen.

Vom Speisewasserbehälter 15 aus wird mittels einer Speisewasserpumpe 16 das Speisewasser durch eine Speisewasserleitung 17 zurück zum Dampferzeuger 2 gepumpt. Hinter der Speisewasserpumpe 16 befindet sich eine erfindungsgemäße Vorwärmer-Anordnung 30 mit einem konventionellen Vorwärmer 31, in dem das Speisewasser auf die gewünschte Temperatur vorgewärmt wird. Hierzu wird der konventionelle Vorwärmer 31 über eine Anzapfdampfleitung 27 mit Anzapfdampf gespeist, welcher von der abdampfseitigen Leitung 6 der Hochdruck-Turbine 5 abzweigt. Wird über die Anzapfdampfleitung 27 Dampf entnommen, so steht naturgemäß für die Niederdruck-Turbine 9 weniger Dampf zur Verfügung, so dass die Gesamtleistung des Dampfkraftwerks 1 geringer ist. Dennoch ist es oft sinnvoll, den konventionellen Vorwärmer 31 mit Anzapfdampf aus der Hochdruck-Turbine 5 zu speisen, da der Wirkungsgrad der gesamten Dampfkraftanlage erhöht werden kann, wenn das Speisewasser mit einer Temperatur knapp unterhalb der Siedetemperatur dem Dampferzeuger zugeführt wird. Da der Vorwärmer 31 mit Dampf aus der Hochdruck-Turbine 5 gespeist wird, wird dieser Vorwärmer auch als Hochdruck-Vorwärmer 31 bezeichnet bzw. die gesamte Vorwärmer-Anordnung 30 als Hochdruck-Vorwärmer-Anordnung. Das Kondensat des im Hochdruck-Vorwärmer 31 benutzten Dampfs wird über eine Leitung 28 in den Speisewasserbehälter 15 geführt.

Erfindungsgemäß weist die Vorwärmer-Anordnung 30 in einer Bypass-Leitung 34, welche um den konventionellen Vorwärmer 31 herumgeführt ist, eine Solar-Vorwärmeinrichtung 35 auf. Hierbei kann es sich beispielsweise um ein Solarfeld mit mehreren parallelen Sonnenkollektorsträngen handeln, durch die das Speisewasser hindurchgeführt wird und direkt durch Einstrahlung von Sonne aufgewärmt wird. Bei den Sonnenkollektoren kann es sich beispielsweise um Parabol-Kollektoren oder Fresnel-Kollektoren handeln.

Durch Einstellung verschiedener Ventile, beispielsweise in der Anzapfdampfleitung 27, in der Speisewasserleitung 17 am Abzweig des Bypasses 34 um den konventionellen Vorwärmer 31 sowie am Anschlusspunkt des Bypasses 34 an die Speisewasserleitung 17 hinter dem konventionellen Vorwärmer 31, lässt sich genau einstellen, welcher Anteil des Speisewasserstroms durch den konventionellen Vorwärmer 31 und welcher Anteil durch die Solar-Vorwärmeinrichtung 35 geht. Ebenso kann in Anzapfleitung ein Ventil vorgesehen werden, mit dem sich der Anzapfmassenstrom verändern lässt. Die Ventile sowie eine Steuereinrichtung, über die die Ventile koordiniert ansteuerbar sind, sind in Figur 1 nicht dargestellt. Es wird an dieser Stelle ausdrücklich darauf hingewiesen, dass Figur 1 ein grob vereinfachtes Schaltbild darstellt und ein erfindungsgemäßes Dampfkraftwerk eine Vielzahl weiterer Komponenten aufweisen kann, die in solchen Dampfkraftwerken üblich sind, insbesondere eine Vielzahl weiterer Turbinen, weitere Vorwärmer etc..

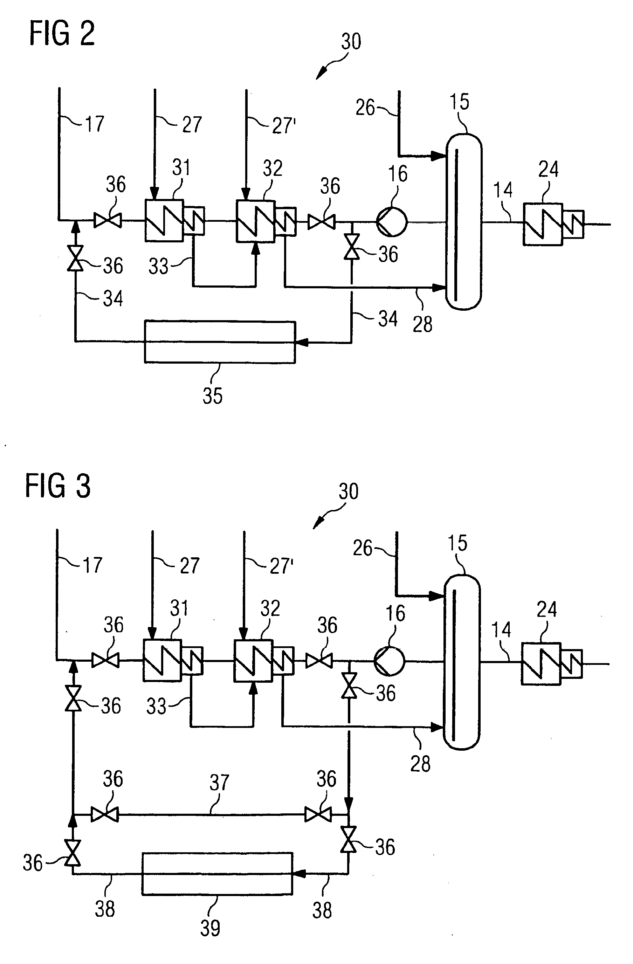

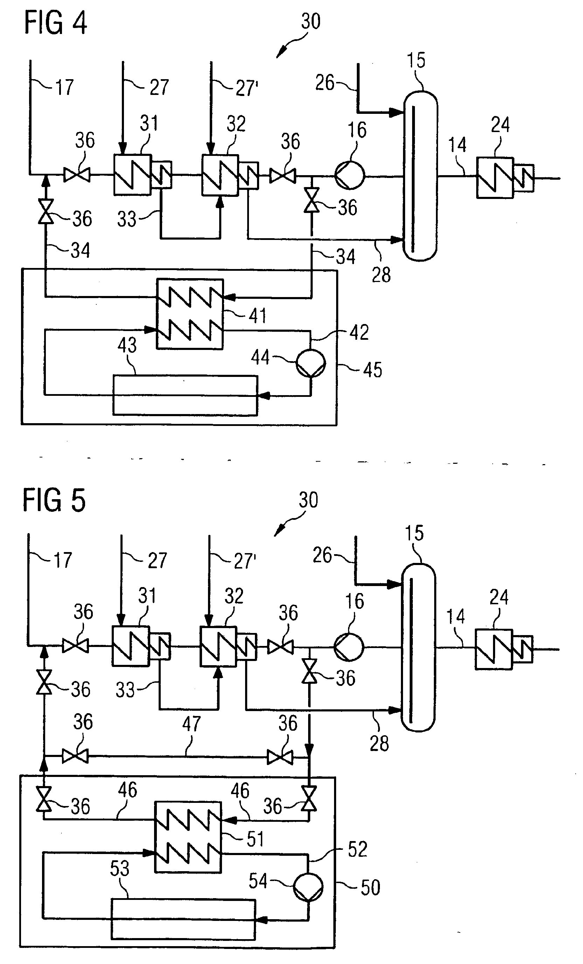

Figur 2 zeigt noch einmal ein ähnlich aufgebautes Ausführungsbeispiel einer erfindungsgemäßen Vorwärmer-Anordnung 30 wie Figur 1. Dargestellt ist hier jedoch lediglich ein Ausschnitt des Dampfkraftwerks mit der Vorwärmer-Anordnung 30, der Speisewasserpumpe 16, dem Speisewasserbehälter 15 und dem Niederdruck-Vorwärmer 24 sowie Abschnitten der Speisewasserleitung 17, der Kondensatleitung 14, der Dampfzuleitung 26 und der Anzapfdampfleitung 27.

Im Unterschied zu dem Ausführungsbeispiel gemäß Figur 1 weist die Hochdruck-Vorwärmer-Anordnung 30 hier zwei in Reihe geschaltete konventionelle Hochdruck-Vorwärmer 31, 32 auf, welche gemeinsam durch eine Bypass-Leitung 34 mit einer Solar-Vorwärmeinrichtung 35 umgehbar sind. Hier ist auch eine Ventilanordnung 36 mit mehreren Ventilen an den Abzweigstellen schematisch dargestellt. In dem in Figur 2 gezeigten Ausführungsbeispiel wird der in Stromrichtung hintere, d.h. näher am Dampferzeuger 2 liegende Hochdruck-Vorwärmer 31 durch Dampf aus einer Anzapfdampfleitung 27 gespeist, wobei diese Anzapfdampfleitung 27 den Anzapfdampf wie in Figur 1 dargestellt wieder aus der Hochdruck-Turbine 5 entnehmen kann. Der in Stromrichtung näher am Speisewasserbehälter 15 liegende Hochdruck-Vorwärmer 32 wird durch eine weitere Dampfleitung 27' mit Anzapfdampf versorgt, welcher beispielsweise direkt am Ende der Hochdruck-Turbine 5 entnommen werden kann und welcher daher eine geringere Temperatur und geringeren Druck aufweist, als der Dampf für den näher am Dampferzeuger liegenden, in Stromrichtung hinteren Vorwärmer 31. Dadurch ist stufenweise eine Erhöhung der Temperatur des Speisewassers möglich. Das anfallende Kondensat aus dem in Stromrichtung hinteren Vorwärmer 31 kann außerdem über eine Leitung 33 noch dem in Stromrichtung vorderen Vorwärmer 32 zugeführt werden. Das darin entstehende Kondensat wird wieder über die Leitung 28 zum Speisewasserbehälter 15 geführt.

Durch eine Ventilanordnung 36 mit mehreren Ventilen kann eingestellt werden, ob und welcher Anteil des Speisewassers durch die konventionellen Vorwärmer 31, 32 strömt und welcher Anteil durch den Bypass 38 mit der Solar-Vorwärmeinrichtung.

Figur 3 zeigt eine etwas geänderte Variante des Ausführungsbeispiels aus Figur 2, wobei wieder die gleichen Komponenten des Dampfkraftwerks 1 dargestellt sind wie in Figur 2. Im Unterschied zu dem Ausführungsbeispiel gemäß Figur 2 ist hier jedoch die Solar-Vorwärmeinrichtung 39 nicht direkt in die um die konventionellen Vorwärmer 31, 32 laufende Bypass-Leitung eingebaut, sondern es wird von der üblichen Bypass-Leitung 37 oder der Speisewasserleitung 17 noch eine weitere Bypass-Leitung 38 abgezweigt, in welcher die Solar-Vorwärmeinrichtung 39 eingebaut ist. Alternativ kann auch eine separate Bypass-Leitung zur Umgehung der Solar-Vorwärmeinrichtung in die Leitung der Solar-Vorwärmeinrichtung eingebaut sein.

Auch diese Solar-Vorwärmeinrichtung 39 ist wieder als Direkterwärmungseinrichtung aufgebaut, d.h. mit Sonnenkollektoren, durch die das Speisewasser direkt zur Erwärmung durch die Sonneneinstrahlung hindurchgeführt wird. Die Ventilanordnung 36 umfasst hierbei noch Ventile, um einzustellen, ob und welcher Anteil des Speisewassers durch den üblichen Bypass 37 strömt und welcher Anteil durch den Bypass 38 mit der Solar-Vorwärmeinrichtung 39. Bei dieser Anordnung können vorteilhafterweise, wenn nicht genügend Sonneneinstrahlung vorliegt, für eine Leistungserhöhung die konventionellen Vorwärmer 31, 32 über den üblichen Bypass 37 umgangen werden, so dass kein zusätzlicher Druckverlust in der Solar-Vorwärmeinrichtung 39 entsteht.

Analog zu den in den Figuren 1 bis 3 dargestellten Ausführungsbeispielen lassen sich entsprechende Solar-Vorwärmeinrichtungen auch parallel zu den Niederdruck-Vorwärmern schalten.

Es wird abschließend noch einmal darauf hingewiesen, dass es sich bei den vorhergehend detailliert beschriebenen Verfahren und den Dampfkraftwerken lediglich um bevorzugte Ausführungsbeispiele handelt, welche vom Fachmann in verschiedener Weise modifiziert werden können, ohne den Bereich der Erfindung zu verlassen, soweit er durch die Ansprüche vorgegeben ist. So können insbesondere die Ventile der Ventilanordnung 36 an anderen Positionen angeordnet sein. Weiterhin ist es auch möglich, dass z.B. die Bypassleitung nicht hinter, sondern vor der Speisewasserpumpe 16 abzweigt, d.h. an einer beliebigen Stelle der Speisewasservorwärmstrecke zwischen dem Kondensatsammler 12 und der Speisewasserpumpe 16. In diesem Fall ist es sinnvoll, wenn im Bypass vor und/oder hinter der Solar-Vorwärmeinrichtung eine Pumpe angeordnet ist, um das Wasser auf das gleiche Druckniveau wie in der üblichen Speisewasservorwärmstrecke zu bringen.

Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Dampfkraftanlage (1) umfassend einen konventionellen Dampferzeuger (2) zur Erzeugung von Dampf, zumindest eine Turbine (5, 9), einen der Turbine (5, 9) abdampfseitig nachgeschalteten Kondensator (11) und ein Wasserleitungssystem (14, 17), um Wasser aus dem Kondensator (11) als Speisewasser dem Dampferzeuger (2) zuzuführen, wobei das Wasserleitungssystem (14, 17) zur Vorwärmung des Speisewassers eine Vorwärmer-Anordnung (30) aufweist, welche zumindest einen durch Anzapfdampf betriebenen Vorwärmer (31, 32) sowie eine parallel zu diesem Vorwärmer (31, 32) angeordnete Bypass-Leitung (34, 37, 40, 47) umfasst, **dadurch gekennzeichnet, dass** die Vorwärmer-Anordnung (30) eine parallel zu dem durch Anzapfdampf betriebenen Vorwärmer (31, 32) geschaltete Solar-Vorwärmeinrichtung (35, 39, 45, 50) aufweist,
die Solar-Vorwärmeinrichtung (39, 50) in einer parallel zur Bypass-Leitung (37, 47) geschalteten weiteren Leitung (38, 46) angeordnet ist, und
die Solar-Vorwärmeinrichtung (35, 39) zumindest einen Sonnenkollektor aufweist, um durchlaufendes Speisewasser direkt durch Sonneneinstrahlung vorzuwärmen, wobei
der Sonnenkollektor ein Parabolrinnen-Kollektor ist.

2. Dampfkraftanlage nach Anspruch 1, **dadurch gekennzeichnet, dass** die Solar-Vorwärmeinrichtung (45, 50) zumindest einen Sonnenkollektor (43, 53), um im Betrieb ein Wärmeträgermedium durch Sonneneinstrahlung aufzuheizen, und einen Wärmetauscher (41, 51) aufweist, um Wärme von dem Wärmeträgermedium an das Speisewasser zu übertragen.

3. Dampfkraftanlage nach einem der vorstehenden Ansprüche, **gekennzeichnet durch** eine Ventilanordnung (36), um eine Wasserdurchflussmenge **durch** den **durch** Anzapfdampf betriebenen Vorwärmer (31, 32) und/oder die Bypass-Leitung (34, 37, 40, 47) und/oder die Solar-Vorwärmeinrichtung (35, 39, 45, 50) einzustellen.

4. Dampfkraftanlage nach einem der vorstehenden Ansprüche, **dadurch gekennzeichnet, dass** die Vorwärmer-Anordnung (30) mehrere in einer Reihenschaltung hintereinander angeordnete, durch Anzapfdampf betriebene Vorwärmer (31, 32) aufweist, wobei die Solar-Vorwärmeinrichtung (35, 39, 45, 50) in einer Leitung angeordnet ist, die die gesamte Reihenschaltung von Vorwärmern (31, 32) überbrückt.

5. Dampfkraftanlage nach einem der vorstehenden Ansprüche, **dadurch gekennzeichnet, dass** die Vorwärmer-Anordnung (30) eine Hochdruck-Vorwärmer-Anordnung umfasst.

6. Verfahren zum Betrieb einer Dampfkraftanlage (1) nach einem der Ansprüche 1 bis 5,
**dadurch gekennzeichnet,**
**dass** zumindest zeitweise eine Vorwärmung von Speisewasser in einer parallel zu einem durch Anzapfdampf betriebenen Vorwärmer geschalteten Solar-Vorwärmeinrichtung (35, 39, 45, 50) erfolgt.

## Claims

1. Steam power plant (1) comprising a conventional boiler (2) for generating steam, at least one turbine (5, 9), a condenser (11) connected downstream of the turbine (5, 9) on the waste steam side, and a water pipe system (14, 17) in order to supply water from the condenser (11) to the boiler (2) as feed water,
wherein the water pipe system (14, 17) has, for pre-heating the feed water, a pre-heater arrangement (30) that comprises at least one pre-heater (31, 32) operated using bleed steam, and a bypass line (34, 37, 40, 47) arranged parallel to this pre-heater (31, 32),
**characterized in that**
the pre-heater arrangement (30) has a solar pre-heating device (35, 39, 45, 50) that is connected in parallel to the pre-heater (31, 32) operated using bleed steam,
the solar pre-heating device (39, 50) is arranged in another line (38, 46) connected in parallel to the bypass line (37, 47), and
the solar pre-heating device (35, 39) has at least one solar collector in order to directly preheat, using solar radiation, feed water running through it,
wherein the solar collector is a parabolic trough collector.

2. Steam power plant according to Claim 1, **characterized in that** the solar pre-heating device (45, 50) has at least one solar collector (43, 53) in order, in operation, to heat a heat transfer medium using solar radiation, and a heat exchanger (41, 51) in order to transfer heat from the heat transfer medium to the feed water.

3. Steam power plant according to either of the preceding claims, **characterized by** a valve arrangement (36) in order to set a water throughflow quantity through the pre-heater (31, 32) operated using waste steam and/or the bypass line (34, 37, 40, 47) and/or the solar pre-heating device (35, 39, 45, 50).

4. Steam power plant according to one of the preceding claims, **characterized in that** the pre-heater arrangement (30) has multiple preheaters (31, 32) that are arranged in series and are operated using bleed steam, wherein the solar pre-heating device (35, 39, 45, 50) is arranged in a line that bridges the entire series connection of preheaters (31, 32).

5. Steam power plant according to one of the preceding claims, **characterized in that** the pre-heater arrangement (30) comprises a high-pressure pre-heater arrangement.

6. Method for operating a steam power plant (1) according to one of Claims 1 to 5,
**characterized in that**,
at least some of the time, feed water is preheated in a solar pre-heating device (35, 39, 45, 50) that is connected in parallel to a pre-heater operated using bleed steam.

## Revendications

1. Installation fonctionnant à la vapeur (1) comprenant un générateur de vapeur (2) conventionnel destiné à une production de vapeur, au moins une turbine (5, 9), un condensateur (11) placé en aval de la turbine (5, 9) côté échappement de vapeur et un système de conduite d'eau (14, 17), pour acheminer vers le générateur de vapeur (2) de l'eau en provenance du condensateur (11) en tant qu'eau d'alimentation, dans laquelle le système de conduite d'eau (14, 17) présente un agencement de préchauffage (30) en vue d'un préchauffage de l'eau d'alimentation, ledit agencement comprenant au moins un dispositif de préchauffage (31, 32) fonctionnant grâce à de la vapeur de soutirage, ainsi qu'une conduite de dérivation (34, 37, 40, 47) agencée en parallèle audit dispositif de préchauffage (31, 32), **caractérisée en ce que**
l'agencement de préchauffage (30) présente un appareil de préchauffage solaire (35, 39, 45, 50) placé en parallèle au dispositif de préchauffage (31, 32) fonctionnant grâce à de la vapeur de soutirage,
l'appareil de préchauffage solaire (39, 50) est agencé dans une autre conduite (38, 46) placée en parallèle à la conduite de dérivation (37, 47), et
l'appareil de préchauffage solaire (35, 39) présente au moins un collecteur solaire pour préchauffer de l'eau d'alimentation circulante directement grâce au rayonnement solaire, dans laquelle ledit collecteur solaire est un collecteur parabolique.

2. Installation fonctionnant à la vapeur selon la revendication 1, **caractérisé en ce que** l'appareil de préchauffage solaire (45, 50) présente au moins un collecteur solaire (43, 53) pour, en cours de fonctionnement, réchauffer un milieu caloporteur grâce au rayonnement solaire, et un échangeur de chaleur (41, 51) pour transférer de la chaleur du milieu caloporteur à l'eau d'alimentation.

3. Installation fonctionnant à la vapeur selon l'une quelconque des revendications précédentes, **caractérisée par** un agencement de clapets (36) destiné à ajuster un débit d'eau traversant le dispositif de préchauffage (31, 32) fonctionnant grâce à de la vapeur de soutirage et/ou la conduite de dérivation (34, 37, 40, 47) et/ou l'appareil de préchauffage solaire (35, 39, 45, 50).

4. Installation fonctionnant à la vapeur selon l'une quelconque des revendications précédentes, **caractérisée en ce que** l'agencement de préchauffage (30) présente plusieurs dispositifs de préchauffage (31, 32) fonctionnant grâce à de la vapeur de soutirage, agencés en série les uns derrière les autres, dans laquelle l'appareil de préchauffage solaire (35, 39, 45, 50) est agencé dans une conduite qui contourne l'ensemble du montage en série de dispositifs de préchauffage (31, 32).

5. Installation fonctionnant à la vapeur selon l'une quelconque des revendications précédentes, **caractérisée en ce que** l'agencement de préchauffage (30) comprend un agencement de dispositifs de préchauffage haute pression.

6. Procédé d'exploitation d'une installation fonctionnant à la vapeur (1) selon l'une quelconque des revendications 1 à 5, **caractérisé en ce que**
un préchauffage d'eau d'alimentation a lieu au moins temporairement dans un appareil de préchauffage solaire (35, 39, 45, 50) placé en parallèle à un dispositif de préchauffage fonctionnant grâce à de la vapeur de soutirage.
